# EUROPEAN PATENT APPLICATION

(11) **EP 1 469 406 A1**
(43) Date of publication of application: **20.10.2004**
(21) Application number: 03008722.5
(22) Date of filing: 16.04.2003
(51) Int. Cl.: G06F 17/60

(54) **Method for generating electronic journals and electronic journal-generating apparatus**

(71) Applicant: Profilo Telra A.S., Mecidiyekoy 80470, Istanbul (TR)
(72) Inventor: Zerman, Mehmet, Mecidiyekoy 8070 (Istanbul) (TR); Asan, Ibrahim, Mecidiyekoy 8070 (Istanbul) (TR); Celik, Aydin, Mecidiyekoy 8070 (Istanbul) (TR)
(74) Representative: HOFFMANN - EITLE

(57) **Abstract**

A method for generating an electronic journal by means of an electronic journal-generating apparatus (50) incorporating a reader device (52) is provided, whereby the steps of receiving transaction data corresponding to transactions to be performed from a transaction data transfer unit (51), storing the received transaction data in a first reader memory unit (104) of the reader device (52), compressing the transaction data in the first reader memory unit (104) of the reader device (52), storing the compressed transaction data, in the first reader memory unit (104), encrypting the compressed transaction data, transferring the compressed and encrypted transaction data from the first reader memory unit (104) to a second reader memory unit (106) of the reader device (52), and transferring the compressed and encrypted transmission data from the second reader memory unit (106) of the reader device (52) to a module device (56) connected to the journal-generating apparatus (50) are carried out. The compressed and encrypted transmission data in the second reader memory unit (106) is erased after the transmission process has been performed successfully.

## Description

### TECHNICAL FIELD OF THE INVENTION

The present invention relates to an electronic journal system, and in particular to a method and an apparatus for generating an electronic journal.

### DESCRIPTION OF RELATED ART

Various systems are provided enabling transaction data to be recorded and preserved in a secure manner for e.g. fiscal requirements, whereby the recorded transaction contents must not be changeable by external users. A major issue of these electronic journal systems is the security of the recorded data.

The publication WO 00/19387 discloses a verifiable electronic journal system for a point of sale device and methods for using the same. The point of sale device employs an electronic journal file instead of using a journal print station. Any transaction information - transaction data - is first stored in a non-volatile random access memory (NVRAM). A data signature for a specific journal is determined on the basis of the contents of the random access memory. Both the transaction information and the data signature are transferred to the separate journal memory, whereas the journal memory may e.g. reside at the point of sale terminal.

Furthermore a hashing technique is preferably used so that a comparatively small NVRAM may be utilized to support a generation of a transaction information set for an electronic journal file for a journal period.

The WO 00/19387 provides a method and systems for electronic journals for transaction based systems. The data comprises, for instance, journal transaction information such as sales and tax data. The data security is provided using standard data security algorithms. For each point of sale device a public (shared) and a private key is generated and stored in its backup memory. An electronic journal file is created, such as at the point of sale terminal associated with the point of sale device, with the contents of the journal controlled by the point of sale device (such as a fiscal logic circuit).

Conventionally an electronic journal file or memory includes a first portion containing an unencrypted listing of the transaction information, for example, the data that would be printed to the paper roll and/or transferred to a journal station of a conventional fiscal printer. A data signature is stored in a second portion of the electronic file. The data signature is preferably an encrypted value used to verify that the printer has not been altered. A printer public or shared key is stored in a shared key portion, which is used to decrypt the data signature for the purposes of verifying the data integrity. Finally, a printer serial number is stored in a device ID-portion of the electronic journal file in order to validate that the public (shared) printer key in the shared key portion is correct for the respective device. As the use of public/private keyed encryption algorithms are state of the art, their operation will not be described herein.

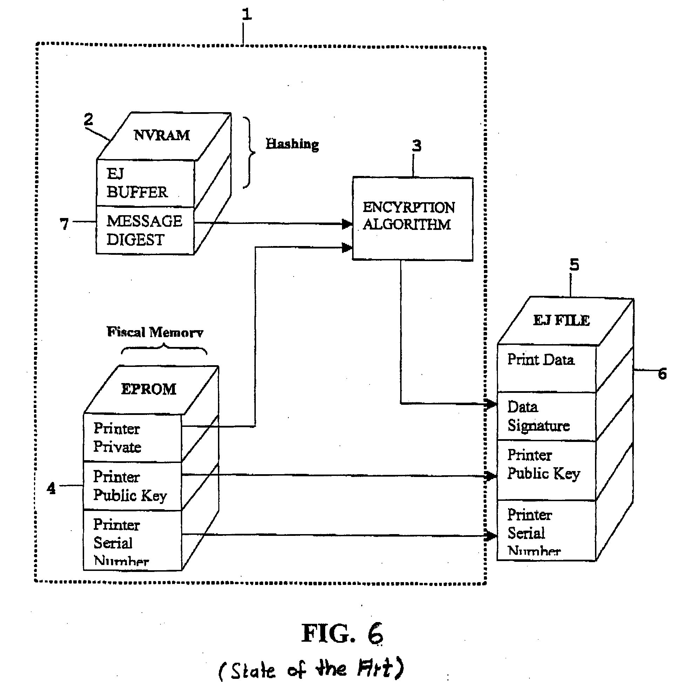

Fig. 6 illustrates the block diagram of a conventional verifiable electronic point of sale device as the one disclosed in the publication WO 00/19387.

A point of sale device 1 comprises a verifiable electronic system, which comprises an electronic journal file instead of using a journal print station. Transaction information or transaction data is first stored in a non-volatile random access memory 2 (NVRAM). The data signature is encrypted by a shared key encryption scheme 3 and the associated public key 4 is also transferred and stored in the electronic journal file 5 of the device, such as a fiscal base, which is receiving the transaction information as it is created.

The data signature 6 is an encrypted version of a message digest 7, which is a running value reflecting the total amount of transaction information passed through the electronic journal file during a journal period. Auditing operations for the invention utilizing an encrypted data signature include decrypting the data signature in the journal memory using the shared key (a public key) in the journal memory.

In addition to that a verification data signature is determined from the transaction information in the journal memory using the hashing technique. The verification data signature is compared to the decrypted data signature in order to determine if the transaction information in the journal memory has been modified in relation to the transaction information transferred from the RAM during the journal period.

In the electronic journal system described in the publication WO 00/19387 transaction data is transmitted through a network or a particular type of connection device to a PC-based medium. Transaction data is stored directly in a readable form like the one sent to the printer unit.

It is a major disadvantage of the conventional electronic journal system that data compression is not being performed.

Since the transaction data is present at an open medium, the security of the data has to be improved.

Conventionally a digital signature of the transaction data is created by using the data, and this signature is stored in the electronic journal file.

State of the art-systems employ two different encryption keys in digital signature, i.e. a private key and a public key. When a private key is used it is possible to perform all relevant operations such as decrypting, verification, and re-encrypting of the encrypted data. The private key is stored in a memory unit where external access is prohibited. The public key is only utilized with respect to the verification of the encrypted data. The conventional public key is derived from the private key and is directly recorded into the electronic journal file.

It is a further disadvantage of conventional electronic journal systems that, in case a weak private key is chosen, the derivation of the private key from the public key may be performed by external users.

The disclosed method for generating an electronic journal exhibits the further disadvantage that the transaction data experiences modifications after it is stored as an electronic journal file. These modifications can be re-enacted using the digital signature created. Thus a sufficient protection of the content of the electronic journal file cannot be ensured.

It is yet another disadvantage of the conventional electronic journal system that, as a data compression is not performed, the conventional electronic journal system requires a substantial amount of memory space.

### SUMMARY OF THE INVENTION

It is thus an object of the present invention to provide an electronic journal system, which preserves the contents of transaction data in a reliable and economical manner.

This object is achieved by a method for generating electronic journals according to claim 1.

Furthermore the object of the present invention is achieved by an electronic journal-generating apparatus comprising the features of claim 13.

Further aspects of the present invention follow from the dependent claims.

The core idea of the invention is to perform a compression of data before it is encrypted and to erase the compressed and encrypted data after a successful transmission to an external electronic journal module device has been carried out.

Hence it is an advantage of the present invention that an external access to the transaction content is very difficult since the key used in the encryption and decompression processes is a private one and the external access to this key is prohibited.

It is advantageous that obtained data become meaningless due to the compression/encryption techniques involved, if any external access occurs. It is a further advantage that using the encrypting technique no key data is transferred to external units as this is the case in the state of the art-techniques. The involved algorithm only uses a private key. Encrypted data is stored in an internal memory unit of the electronic journal reader device. After a successful storage of compressed/encrypted data the same are transmitted to the electronic journal module device. After a successful transmission has been carried out the transaction data stored in the memory unit of the electronic journal reader device are erased.

It is yet another advantage of the present invention that transaction data is compressed by approximately 65%-70% resulting in reduced requirements for memeory space. Thus, the electronic journal-generating apparatus, and especially the electronic journal module device, can be produced cost-effectively.

Another advantage of the electronic journal-generating apparatus is that the requirements for a printer unit and a paper-rolling unit, which are generally used in journal-generating apparatuses, are eliminated. Thus, a further reduction in material and labor cost can be achieved.

Furthermore users benefit from a reduction in expenses by using electronic journal module devices instead of paper rolls. For example, electronic journal module devices are capable to store transaction data of about 400.000 lines. This amount of data can only be recorded by using approximately 125 paper rolls. Thus, it is evident that the proposed electronic journal module devices are far more advantageous with respect to storing costs.

It is an obvious advantage of the present invention that users are able to preserve electronic journal module devices instead of paper rolls for accounting and fiscal requirements. Preserving/storing and protection of paper rolls is problematic. Electronic journal module devices require less storage space and are more resistant to environmental conditions as compared to paper rolls. Furthermore electronic journal module devices contribute to environmental protection.

The inventive method for generating electronic journals is designed for systems, where transaction data is recorded on a electronic journal module device, whereby the recorded data can be preserved continuously without any need for external energy. Any access by external users to the electronic journal module device is prevented.

Furthermore a copy of the current electronic journal module device is maintained in a memory unit of the electronic journal reader device. Thus, in case of a loss of or a failure in the electronic journal module device a new electronic journal module device with the same content can be generated and the pre-recorded transaction data can be recorded onto the new electronic journal module device.

For security reasons only the last electronic journal module device, which has been used, is stored in a memory unit of the electronic journal reader device. If any failure occurs such as a power off, a hardware failure, a software failure, etc. while the electronic journal reader device is transferring transaction data to the memory unit of the electronic journal reader device, the electronic journal reader device automatically detects that there is an unfinished operation and transmits an appropriate message to the main system, i.e. to the electronic journal-generating apparatus, when it is activated.

The method for generating an electronic journal according to the present invention essentially comprises the following steps: Receiving transaction data corresponding to transactions to be performed by a user from a transaction data transfer unit; storing the received transaction data in a first reader memory unit of an electronic journal reader device; compressing the transaction data in the first reader memory unit of the reader device to obtain compressed transaction data; storing the compressed transaction data at a memory area different from the memory area where the transaction data of the first reader memory unit is stored; encrypting the compressed transaction data; transferring the compressed and encrypted transaction data from the first reader memory unit to a second reader memory unit of the reader device, whereby the second reader memory unit functions as a backup unit for the data contained in an electronic journal module device currently connected to the electronic journal-generating apparatus; and transferring the compressed and encrypted transmission data to the electronic journal module device being arranged externally for final storage.

According to a further aspect of the present invention the compressed and encrypted transmission data in the second reader memory unit is erased after the transmission process has been performed.

According to another aspect of the present invention a recovery step is provided to be applied if there is a pending job due to a problem which has been occurred while storing the compressed and encrypted transaction data into the first reader memory unit of the reader device.

According to yet another aspect of the present invention the transaction data is transferred to an external printer for printing the transaction data.

Furthermore a copy of the current electronic journal module device and information on preceding electronic journal modules are stored in the first reader memory unit.

According to yet another aspect of the present invention all compression and encryption processes are performed using a reader processing unit in the electronic journal reader device.

Furthermore it is an advantage of the present invention that the electronic journal reader device can be updated using software transferred from a personal computer (PC) via an interface which is attachable to a module device communication socket provided in the reader device. Thus a user is enabled to perform necessary software modifications and to add new features to the existing software without removing the reader processing unit from the network.

Furthermore the content of the electronic journal reader device can be read using the personal computer (PC) permitting a backup of data in the case of failures in the journal-generating apparatus.

According to yet another aspect of the present invention compression and/or encryption operations are performed in the first reader memory unit of the electronic journal reader device.

Furthermore all information on the used electronic journal module devices and a copy of the current electronic journal module device are preserved in the first reader memory unit of the electronic journal reader device permitting to preserve transaction data in case of a possible break down or disappearance of the specific electronic journal module device.

According to yet another aspect of the present invention a communication with the electronic journal module device can only be performed by authorized instructions, whereby authorization is achieved using predetermined codes.

The electronic journal-generating apparatus according to the present invention essentially comprises: A transaction data transfer unit for transferring transaction data corresponding to transactions; a first reader memory unit for storing the transaction data; a means for compressing and encrypting the stored transaction data; a memory area for storing the compressed and encrypted transaction data; a means for transferring the compressed and encrypted transaction data to the memory area of the electronic journal module device; an erasing means for erasing the compressed and encrypted transaction data in the first reader memory unit after a transfer of the compressed and encrypted transaction data.

According to another aspect of the present invention the electronic journal reader device comprises: a second memory unit; a reader processing unit enabling the communication of the second memory unit with the first reader memory unit; a module device communication socket for connecting an external device; a journal-generating communication socket for communicating with the electronic journal-generating apparatus; and a power control unit.

According to yet another aspect of the present invention the first reader memory unit comprises memory space which is sufficient to handle compression and encryption operations, being performed on the transaction data by the reader processing unit included in the electronic journal reader device.

Furthermore the electronic journal module device consists of a second reader memory unit whereby the reader processing unit enables the communication with the first reader memory unit.

According to yet another aspect of the present invention the electronic journal reader device is embedded into the electronic journal-generating apparatus as a separate part.

Furthermore, the electronic journal module device is attached as a removable and/or separate part to the electronic journal reader device.

In a preferred embodiment of the present invention the second reader memory unit is a backup unit for the transaction data to be transferred to the electronic journal module device.

Preferably the second reader memory unit comprises a data flash unit.

According to yet another aspect of the present invention the data processing unit is a microcontroller. Furthermore the first reader memory unit is provided as a non-volatile random access memory (NVRAM).

According to yet another aspect of the present invention the electronic journal reader device has a unique serial number for identification. Preferably this serial number is recorded in the reader device during the manufacturing process. After the manufacturing process the electronic journal reader device is arranged together with the electronic journal-generating apparatus and starts to communicate with the electronic journal-generating apparatus through conventional software, which is embedded in the electronic journal-generating apparatus.

Preferably some information such as fiscal code and fiscal number of the electronic journal-generating apparatus, an authorization date and/or authorization time is transferred to the electronic journal reader device during this authorization phase, whereby the electronic journal reader device transmits its unique serial number to the electronic journal-generating apparatus. The unique serial number ensures that a module can only be used in a unique electronic journal-generating apparatus.

According to yet another aspect of the present invention the module device comprises: A module memory unit; a reader device communication socket; and a module processing unit.

Preferably the module memory unit is provided as a flash memory unit.

According to yet another aspect of the present invention the module memory unit is operated without supply of external energy.

According to yet another aspect of the present invention the module device has a unique serial number. Preferably this unique serial number ensures that a module device can only be used in a single electronic journal-generating apparatus. The unique serial number is given to the electronic journal module device during the manufacturing process.

According to yet another aspect of the present invention the module device is attached as a removable/separate part to the electronic journal reader device.

It is a specific advantage of the inventive electronic journal system that it can be incorporated in cash registers, point of sale devices, taxi-meters and electronical controlled gates in restricted zones.

### BRIEF DESCRIPTION OF THE DRAWINGS

Embodiments of the present invention are depicted in the drawings and are explained in more detail in the following description.

In the drawings:
- Fig. 1: is a flow chart illustrating the steps for creating the compressed and encrypted electronic journal file and for transferring this file to a electronic journal module device;
- Fig. 2: is a block diagram of an electronic journal-generating apparatus according to a preferred embodiment of the present invention;
- Fig. 3: is a block diagram illustrating a reader device according to a preferred embodiment of the present invention;
- Fig. 4: is a block diagram illustrating a module device to be connected to the reader device shown in Fig. 3 according to a preferred embodiment of the present invention;
- Fig. 5: is a flow chart illustrating the steps to be followed when there is a pending job due to a problem occurred while storing the transaction data into a first reader memory unit.

### DETAILED DESCRIPTION OF PREFERRED EMBODIMENTS

The present invention now will be described more fully hereinafter with reference to the accompanying drawings, in which preferred embodiments of the invention are shown.

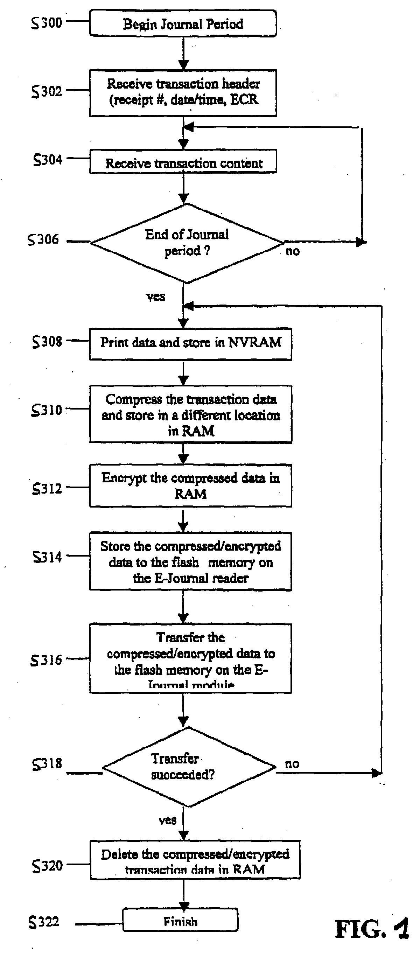

Fig. 1 is a flow chart illustrating steps for creating a compressed and encrypted electronic journal file and for transferring this file to the external electronic journal module device.

The operations from the reception of the transaction data via the transfer of the generated electronic journal file to the electronic journal module device 56 are detailed in Fig. 1.

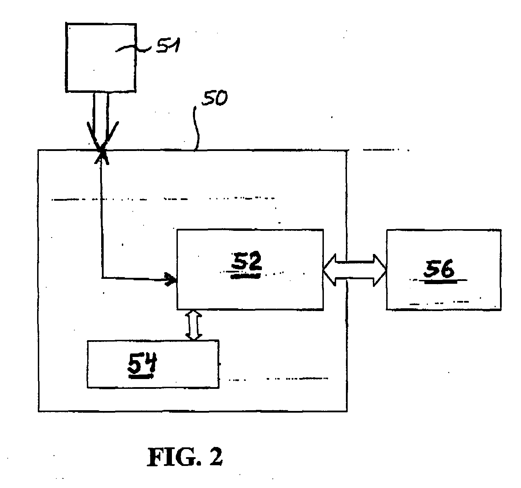

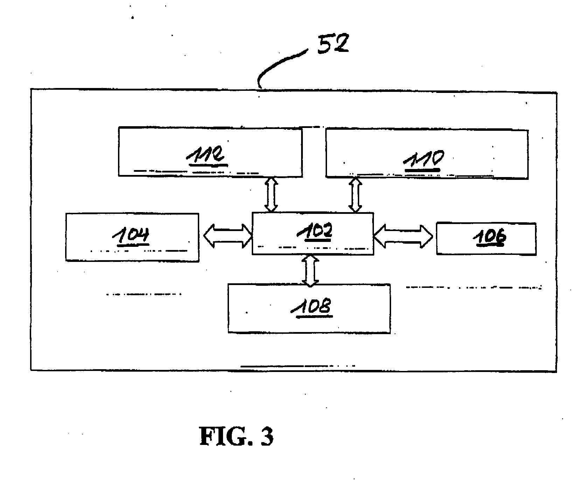

At the start of a journal period at step S300 an electronic journal reader device 52, as will be explained with reference to Fig. 3, receives transaction data 302 from an electronic journal-generating apparatus 50 as shown in Fig. 2.

The transaction data received at step S302 comprises a receipt number and information on data and time. Furthermore, the transaction data contains an identification ID of the journal-generating apparatus.

Subsequently the data are written into the data buffer of the electronic journal reader device 52. The reception of transaction data continues (S304) until all of the data lines have been transmitted. The end of the journal period is determined at step S306. If the end of the journal period is reached, the process proceeds to step S308 where the transaction data are both printed and stored in a non-volatile random access memory (NVRAM), i.e. in the first reader memory unit 104 of the reader device 52.

According to this embodiment of the present invention the stored transaction data is compressed and restored at a different memory area in the first reader memory unit 104 (see Fig. 2) at step S310. Subsequently the compressed data is encrypted at step S312.

It is noted that all compression and encryption processes are performed using a reader processing unit 102 shown in Fig. 2 of the electronic journal reader device 52. After the compression/encryption processes have been performed, the compressed/encrypted data is stored in a second reader memory unit 106 of the electronic journal reader device 52 as illustrated in step S314 of Fig. 1.

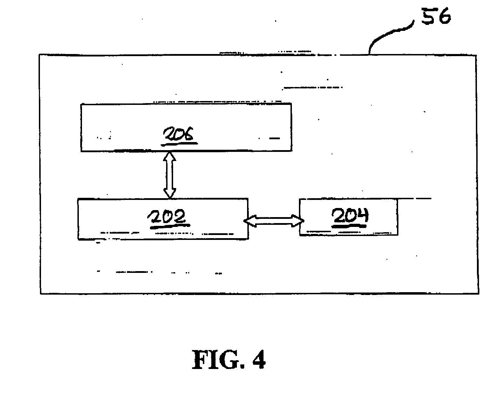

Then the compressed/encrypted data is transferred to a module memory unit 204 of an electronic journal module device 56 (step S316) shown in Fig. 4. Whether the transfer of the transaction data has been successful or not is determined at step S318. If the transfer of the transaction data has not been successful, the procedure returns to step S308.

If the transfer of the transaction data has been successfully performed, the procedure proceeds to step S320, where the compressed/encrypted transaction data stored in the second reader memory unit 106 of the electronic journal reader device 52 are erased. After the erasing of these data the procedure is stopped at step S322 until a new journal entry period starts.

Fig. 2 shows a block diagram of the functional units of an electronic journal system according to a preferred embodiment of the present invention.

The electronic journal system consists of a journal reader 52 which is embedded as a separate part into a journal-generating apparatus 50, and an electronic journal module device 56, which is attached as a removable/separate part at the electronic journal reader device 52.

Data to be transferred for the generation of an electronic journal - will be referred to as transaction data - corresponding to transactions to be performed by a user is received from a transaction data transfer unit 51.

After the manufacturing step the electronic journal reader device communicates with the journal-generating apparatus 50 using conventional software embedded in a main processing unit 54 incorporated in the journal-generating apparatus 50.

During this communication process an authorization phase is started, whereby information such as a fiscal code and/or a fiscal number of the journal-generating apparatus 50 is transmitted to the electronic journal reader device 52 from the electronic journal-generating apparatus 50 through the main processing unit 54. In return the electronic journal reader device 52 transmits its unique serial number to the electronic journal-generating apparatus 50.

Fig. 3 is a block diagram of the electronic journal reader device 52 according to a preferred embodiment of the present invention.

The main task of the electronic journal reader device 52 is to perform writing and reading operations instructed by the electronic journal-generating apparatus 50 in a secure manner.

The electronic journal reader device 52 comprises a first reader memory unit 104, which is suited to handle compression and encryption operations being performed on the transaction data through a reader processing unit 102. The reader processing unit 102 is included in the electronic journal reader device 52. Furthermore the electronic journal reader device 52 contains a second reader memory unit 106 which is used for storing the compressed and encrypted transaction data from the first reader memory unit 104, as shown in step S314 in Fig. 1.

All information on the used electronic journal module devices and a copy of the current electronic journal module device 56 are preserved in the second reader memory unit 106. Thus it is possible to preserve the transaction data in case of a possible break down of or failure in the electronic journal module devices 56.

The reader device 52 further comprises a power control unit 108, which is used to control the power supplied to the electronic journal module device 56.

Furthermore two communication sockets are provided in the electronic journal reader device 52. A journal-generating apparatus communication socket 110 enables the communication with the electronic journal-generating apparatus 50. The interaction with the electronic journal-generating apparatus 50 is performed through a serial communication technique.

In this serial communication technique instructions and responses are transmitted using a frame structure, whereby each frame is checked by a LRC (longitudinal redundancy check) failure control method. The electronic journal reader device 52 always waits for an instruction from the journal-generating apparatus 50.

After receiving a valid instruction the electronic journal reader device 52 executes the required operations and transmits the response to the journal-generating apparatus 50, i.e. according to a master-slave-approach.

The second socket of the electronic journal reader device 52 is a module device communication socket 112. This module device communication socket enables a communication with the electronic journal module devices 56 and is also used to update the software of the electronic journal reader device. The communication is performed through a serial communication technique, too.

During the communication period the electronic journal reader device 52 acts as a master and the electronic journal module device 56 acts as a slave. Any transaction between the electronic journal reader device 52 and the electronic journal module device 56 is initiated by an instruction of the electronic journal reader device 52.

Furthermore, the software of the electronic journal reader device 52 can be updated by a personal computer PC through an interface, which is attachable to the module device communication socket 112 enabling the connection to a PC. This feature permits an update of the software being modified from time to time and to add new features to the existing software without disconnecting the reader processing unit 102 from the network.

Moreover, a PC can be used to investigate the whole contents of the electronic journal reader device in the same manner. Thus data in electronic journal-generating apparatus which are damaged can be saved easily.

Fig. 4 shows a block diagram of an electronic journal module device 56 according to a preferred embodiment of the present invention.

The electronic journal module device 56 comprises a module memory unit 204 and a module processing unit 202. The module processing unit 202 enables a communication with the module memory unit 204.

The operations of writing into the module memory unit 204 and of reading from the module memory unit 204 are initiated by instructions transmitted to the module processing unit 202. Thus a communication with the electronic journal module device 56 can only be performed by authorized instructions. The authorization is performed using special codes. Hence the security of transaction data stored in the module memory unit 204 is ensured.

The electronic journal module device is attachable as a removable/separate part to the electronic journal reader device 52 through a reader device communication socket 206.

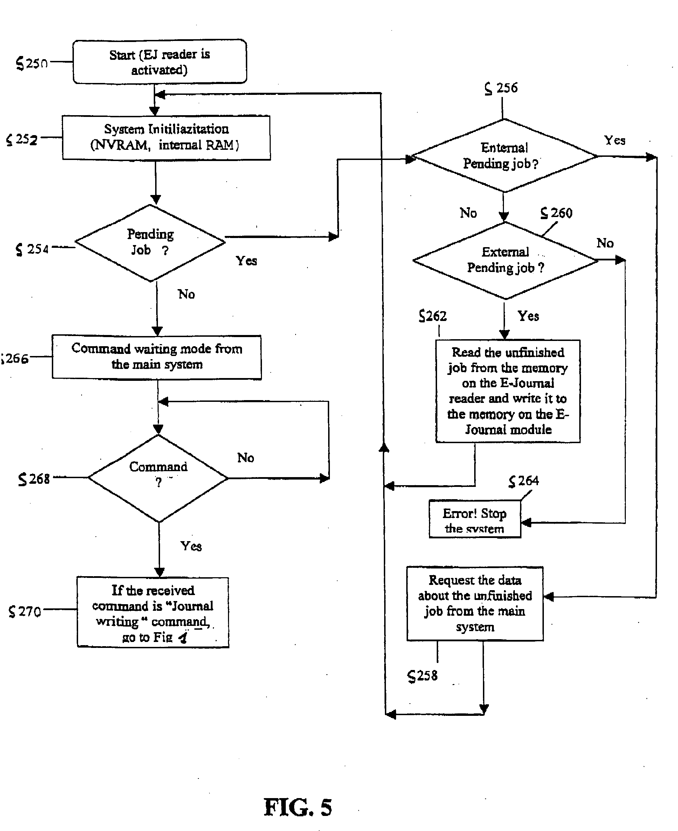

Fig. 5 is a flow chart illustrating the steps to be followed when a pending job due to a problem or failure occurred while storing the transaction data into the first reader memory unit 104 is present.

Such a problem can be caused by a power-off of the electronic journal system. When the electronic journal system boots up again at step S250 (Fig. 5) firstly the electronic journal system is initialized at step S252 and then it is checked, at step S254, whether there is a pending job.

If it is determined that a pending job, i.e. an unfinished job, exists the system firstly checks whether the pending job is an internal pending job (step S256) caused by a problem in the electronic journal reader device 52. If the pending job is an internal pending job the electronic journal system will request the missing transaction data about the pending job from the electronic journal-generating apparatus 50 at step S258.

Only after the required transaction data have been obtained the system again returns to the initialisation mode at step S252. If there is no internal pending job the electronic journal system will check whether there is an external pending job caused by a problem or failure in the transmission of the transaction data to the electronic journal module device 56 at step S260. If it is determined that there is an external pending job, the electronic journal system will read the missing data concerning the pending job from the second reader memory unit 106 of the electronic journal reader device 52 at step S262 and writes the missing data into the module memory unit 204 of the electronic journal module device 56.

Only after the required transaction data have been obtained the electronic journal system will again return to the initialisation mode at step S252. If an external pending job does not exist, it is followed that there has to be an error in the electronic journal system and thus the electronic journal system will be stopped at step S264.

Only after being sure that no pending job exists, which is determined at step S254, the procedure will proceed to the instruction-waiting mode at step S266, which is established in the electronic journal-generating apparatus 50. If the incoming instruction is a "Journal writing" instruction at step S268, the electronic journal system will proceed to the steps described with reference to Fig. 1 at S270.

The electronic journal system according to a preferred embodiment of the present invention presents a cost-effective solution for small enterprises using a single electronic journal-generating apparatus.

The electronic journal system according to the present invention provides a method for preserving transaction data in a secure manner suited for fiscal requirements. It is a specific advantage that the content of the transaction data cannot be changed by external users.

Furthermore it is of economical importance that the electronic journal system according to the present invention compresses the transaction data by approximately 65%-70% resulting in a considerably reduced allocated memory space thus an inexpensive and small electronic journal-generating apparatus can be designed.

If there is a problem such as power off etc. while the electronic journal reader device transfers transaction data to a second reader memory unit of the electronic journal reader device, the electronic journal reader device will automatically detect that there is an unfinished operation and will transfer this information to the main electronic journal system, i.e. the electronic journal-generating apparatus when it is activated.

It is economically advantageous that the electronic journal system only consists of two devices, i.e. the electronic journal reader device, which is arranged in the electronic journal-generating apparatus, and the electronic journal module device, which is attachable to the electronic journal reader device.

For a practical usage it is advantageous that the software of the electronic journal reader device can be updated by an external personal computer PC, which is attachable to a module device communication socket of the electronic journal reader device.

Compressed data cannot be read directly after it is stored in the flash memory of the electronic journal module. Access to the flash memory on the electronic journal module is controlled by a microcontroller.

It is not possible to reach the data memory without the interaction of the microcontroller. Access to the data memory is enabled through instructions sent to microcontroller. These instructions are divided into certain classes. Each instruction has a specific authorization degree. The specific authorization degree is determined by the mutual authorization requirements between the electronic journal module and the electronic journal reader. The authorization is performed through a 64-bit code.

The electronic journal module device is blocked if the code is entered three times incorrectly in a sequence. Thus external access to the electronic journal module is prevented.

Data in the electronic journal reader device is protected in the same manner. Furthermore a copy of the current electronic journal module device is kept in the memory of the electronic journal reader device. Thus in case of loss, break down, failure, etc. of the electronic journal module device, a new electronic journal module device with a contents identical to the previous one can be created and the pre-recorded reception data can be transferred to the electronic journal module device again.

If the electronic journal module device is attached to the electronic journal-generating apparatus, a fiscal code and number of the journal-generating apparatus is written into the electronic journal module device.

A serial number is given to the electronic journal module device by the journal-generating apparatus and this number is automatically.recorded both in the electronic journal module device and the electronic journal reader device. Thus an electronic journal module device used in a specific journal-generating apparatus cannot be used in another one.

For example, in cash register applications a sequential serial number is given to each electronic journal module device. This sequential serial number is printed to the mandatory Z-report at the end of each date.

An information sticker, whose data are written by the user manually, is used for the electronic journal module. This information sticker will contain information such as a serial number of the electronic journal module device, the first date of usage, the number of the first registered receipt and the ending date of the usage. This information is also kept in the electronic journal reader device of the journal-generating apparatus.

A report, which covers all the information related to all electronic journal modules devices can be printed whenever desired. Thus the serial number of the electronic journal module device being used at the requested date can be determined.

This invention may, however, be embodied in many different forms and should not be construed as limited to the embodiments set forth herein.

Rather, these embodiments are provided so that this disclosure will be thorough and complete, and will fully convey the scope of the invention to those skilled in the art.

As will be appreciated by one of skill in the art, the present invention may be embodied as methods, systems or computer program products.

Accordingly, the present invention may take the form of a hardware embodiment, a software embodiment or an embodiment combining software and hardware aspects.

### LIST OF REFERENCE NUMERALS

- 50: Journal-generating apparatus
- 51: Transaction data transfer unit
- 52: Electronic journal reader device
- 54: Main processing unit
- 56: Electronic journal module device
- 102: Reader processing unit
- 104: First reader memory unit
- 106: Second reader memory unit
- 108: Power control unit
- 110: Journal-generating apparatus communication socket
- 112: module device communication socket
- 202: module processing unit
- 204: module memory unit
- 206: reader device communication socket

## Claims

1. A method for generating an electronic journal by means of an electronic journal-generating apparatus (50) incorporating a reader device (52), comprising the following steps:
a) receiving transaction data corresponding to transactions to be performed from a transaction data transfer unit (51);
b) storing the received transaction data in a first reader memory unit (104) of the reader device (52);
c) compressing the transaction data in the first reader memory unit (104) of the reader device (52) to obtain compressed transaction data;
d) storing the compressed transaction data, in the first reader memory unit (104), at a memory area different from the memory area where the transaction data is stored;
e) encrypting the compressed transaction data;
f) transferring the compressed and encrypted transaction data from the first reader memory unit (104) to a second reader memory unit (106) of the reader device (52); and
g) transferring the compressed and encrypted transmission data from the second reader memory unit (106) of the reader device (52) to a module device (56) connected to the journal-generating apparatus (50).

2. A method for generating an electronic journal according to claim 1, wherein the second reader memory unit (106) of the reader device (52) functions as a backup unit for data contained in a current electronic journal module device (56).

3. A method for generating an electronic journal according to claim 1 or 2, wherein the compressed and encrypted transmission data in the second reader memory unit (106) is erased after the transmission process has been performed.

4. A method for generating an electronic journal according to claim 1, wherein a recovery step is performed if there is a pending job due to a failure which has been occurred while storing the compressed and encrypted transaction data into the first reader memory unit (104) of the reader device (52).

5. A method for generating an electronic journal according to claim 1, wherein transaction data is transferred to an external printer for printing.

6. A method for generating an electronic journal according to claim 1, wherein a copy of the current electronic journal module device (56) and information on preceding electronic journal module devices are stored in the first reader memory unit (104).

7. A method for generating an electronic journal according to claim 1, wherein compression and encryption processes are performed using a reader processing unit (102) in the electronic journal reader device (52).

8. A method for generating an electronic journal according to claim 1, wherein the electronic journal reader device (52) is updated using software transferred from a personal computer (PC) via an interface which is attachable to a module device communication socket (112) provided in the reader device (52).

9. A method for generating an electronic journal according to claim 8, wherein the contents of the electronic journal reader device (52) is read using the personal computer (PC) permitting a backup of data in case of a failure in the journal-generating apparatus (50).

10. A method for generating an electronic journal according to claim 1, wherein compression and/or encryption operations are performed in the first reader memory unit (104) of the electronic journal reader device (52).

11. A method for generating an electronic journal according to claim 1, wherein information on the preceeding electronic journal module devices and a copy of the current electronic journal module device (56) are stored in the first reader memory unit (104) of the electronic journal reader device (52) permitting to preserve transaction data in case of a failure in the current electronic journal module device (56).

12. A method for generating an electronic journal according to claim 1, wherein a communication with the electronic journal module device (56) is performed by authorized instructions, whereby authorization is achieved through predetermined codes.

13. An electronic journal system comprising:
a) a transaction data transfer unit (51) for transferring transaction data corresponding to transactions;
b) an electronic journal module device (56); and
c) an electronic journal-generating apparatus (50) including:
c1) an electronic journal reader device (52) having
(i) a first reader memory unit (104) for storing the transaction data;
(ii) a means for compressing and encrypting the stored transaction data and for restoring the compressed and encrypted transaction data in the first reader memory unit (104) at a memory area different from the memory area where the transaction data are stored; and
c2) a means for transferring the compressed and encrypted transaction data to the electronic journal module device (56).

14. An electronic journal system according to claim 13, further comprising an erasing means for erasing the compressed and encrypted transaction data in the first reader memory unit (104) after a transfer of the compressed and encrypted transaction data to the electronic journal reader device (52) has been performed.

15. An electronic journal system according to claim 13, wherein the electronic journal reader device (52) further comprises:
a) a second memory unit (106);
b) a reader processing unit (102) enabling the communication of the second memory unit (106) with the first reader memory unit (104);
c) a module device communication socket (112) for connecting an external device;
d) a journal-generating apparatus communication socket (110) for communicating with the electronic journal-generating apparatus (50) ; and
e) a power control unit (108).

16. An electronic journal system according to claim 15, wherein the first reader memory unit is provided with memory space sufficient for compression and encryption operations which are performed on the transaction data by the reader processing unit (102) incorporated in the electronic journal reader device (52).

17. An electronic journal system according to claim 13, wherein the electronic journal reader device (52) is incorporated in the electronic journal-generating apparatus (50) as a separate portion.

18. An electronic journal system according to claim 13, wherein the electronic journal module device (56) is a separate part which is attachable to and removable from the electronic journal reader device (52).

19. An electronic journal system according to claim 13, wherein the second reader memory unit (106) of the electronic journal reader device (52) is provided as a backup unit for transaction data to be transferred to the electronic journal module device (56).

20. An electronic journal system according to claim 15, wherein the second reader memory unit (106) of the electronic journal reader device (52) is a data flash unit.

21. An electronic journal system according to claim 15, wherein the reader data processing unit (102) is a microcontroller.

22. An electronic journal system according to claim 13, wherein the first reader memory unit (104) of the electronic journal reader device (52) is provided as a non-volatile random access memory (NVRAM).

23. An electronic journal system according to claim 13, wherein the electronic journal reader device (52) has a unique serial number for identification.

24. An electronic journal system according to claim 23, wherein the serial number is recorded in the reader device during the manufacturing process.

25. An electronic journal system according to claim 13, wherein the electronic journal module device (56) comprises:
a) a module memory unit (204) for storing transferred transaction data;
b) a reader device communication socket (206) for communicating with the electronic journal reader device (52); and
c) a module processing unit (202).

26. An electronic journal system according to claim 25, wherein the module memory unit (204) of the electronic journal module device (56) is provided as a flash memory unit.

27. An electronic journal system according to claim 25, wherein the module memory unit (204) of the electronic journal module device (56) is operable without supply of external energy.

28. An electronic journal system according to claim 13, wherein the electronic journal module device (56) has a unique serial number.

29. An electronic journal system according to claim 28, wherein the unique serial number of the electronic journal module device (56) provide an identification means ensuring that a specific electronic journal module device (56) can only be operated with a unique electronic journal-generating apparatus (50).
